# EUROPEAN PATENT APPLICATION

(11) **EP 4 478 191 A1**
(43) Date of publication of application: **18.12.2024**
(21) Application number: 24181857.4
(22) Date of filing: 13.06.2024
(51) Int. Cl.: G06F 9/50

(54) **INFRASTRUCTURE DRIVEN AUTO-SCALING OF WORKLOADS**

(30) Priority: 14.06.2023 US 202318210024
(71) Applicant: VMware LLC, Palo Alto, CA 94304 (US)
(72) Inventor: Beveridge, Daniel James, Valrico, 33596 (US)
(74) Representative: Dilg, Haeusler, Schindelmann Patentanwaltsgesellschaft mbH

(57) **Abstract**

The disclosure provides a method for scaling workloads. The method includes receiving information regarding resources of one or more host machines (102) running one or more virtual machines (104). The method further includes determining, based on the information, to change a quantity of the one or more virtual machines (104) running on the one or more host machines (102). The method further includes determining an amount to change the quantity of the one or more virtual machines (104) running on the one or more host machines (102) based on utilization of one or more resource types of the one or more host machines (102), the utilization indicated by the information. The method further includes causing a change in the quantity of the one or more virtual machines (104) running on the one or more host machines (102) by the determined amount.

## Description

Modern applications are applications designed to take advantage of the benefits of modern computing platforms and infrastructure. For example, modern applications can be deployed in one or more data centers, such as in a multi-cloud or hybrid cloud fashion. For example, an application may be deployed in a single cloud or across multiple clouds and thus consume both cloud services executing in a public cloud and local services executing in a private data center (e.g., a private cloud). Within the public cloud or private data center, modern applications can be deployed onto one or more virtual machines (VMs), containers, application services, and/or the like.

A container is a package that relies on virtual isolation to deploy and run applications that access a shared operating system (OS) kernel. Containerized applications, also referred to as containerized workloads, can include a collection of one or more related applications packaged into one or more groups of containers, referred to as pods. Containerized workloads run on a container orchestration platform that enables the automation of much of the operational effort required to run containers having workloads and services. This operational effort includes a wide range of things needed to manage a container's lifecycle, including, but not limited to, provisioning, deployment, scaling (up and down), networking, and load balancing.

Kubernetes^{®} (K8S^{®}) software is an example open-source container orchestration platform that automates the deployment and operation of such containerized workloads. In particular, Kubernetes may be used to create a cluster of interconnected nodes, including (1) one or more worker nodes that run the containerized workloads (e.g., in a worker plane) and (2) one or more control plane nodes (e.g., in a control plane) having control plane components running thereon that control the cluster. Control plane components make global decisions about the cluster (e.g., scheduling), and can detect and respond to cluster events (e.g., starting up a new pod when a workload deployment's intended replication is unsatisfied). As used herein, a node may be a physical machine, or a VM configured to run on a physical machine running a hypervisor.

A data center includes physical machines (also referred to as host machines) that provide resources for running modern applications. In particular, the physical machines include processors, memory, and/or other physical resources for running modern applications. VMs may be instantiated and run on the physical machines. Further, pods may be created and run on the VMs, which may be referred to as pod VMs based on pods running on such VMs. The running of the VMs and pods on the VMs may utilize resources of the physical machines. Often times only a limited amount of the physical resources of the physical machines of the data center are used. For example, typically 75% of the physical resources remain as unused capacity of the data center on average across each 24 hour period with peaks occurring during midday usage and periods of lowest utilization during overnight periods. For example, where the physical machines of the data center have 3200 GB of memory, 2400 GB of memory may go unused on average with around 1600-1800 GB being used during midday hours and 600 GB being use during overnight hours. Further, where the physical machines of the data center have 100 CPU cores, 75 CPU cores worth of compute cycles may go unused on average across a 24 hour period with similar peaks and valleys at different times during the day. The ability to use the unused capacity of a data center remains a challenge as many groups provision their capacity needs based on anticipated peak utilization which is seldom realized.

It should be noted that the information included in the Background section herein is simply meant to provide a reference for the discussion of certain embodiments in the Detailed Description. None of the information included in this Background should be considered as an admission of prior art.

### Summary

One or more embodiments provide a method for scaling workloads. The method includes receiving information regarding resources of one or more host machines running one or more virtual machines. The method further includes determining, based on the information, to change a quantity of the one or more virtual machines running on the one or more host machines. The method further includes determining an amount to change the quantity of the one or more virtual machines running on the one or more host machines based on utilization of one or more resource types of the one or more host machines, the utilization indicated by the information. The method further includes causing a change in the quantity of the one or more virtual machines running on the one or more host machines by the determined amount.

Further embodiments include a non-transitory computer-readable storage medium comprising instructions that cause a computer system to carry out the above methods, as well as a computer system configured to carry out the above methods.

### Brief Description of the Drawings

Figure 1A illustrates a computing system in which embodiments described herein may be implemented.
Figure 1B illustrates an example cluster for running containerized workloads in the computing system of Figure 1A, according to an example embodiment of the present disclosure.
Figure 2 shows a flow diagram depicting a method for scaling a number of containerized workloads running on one or more hosts based on a utilization of resources of the one or more hosts.

To facilitate understanding, identical reference numerals have been used, where possible, to designate identical elements that are common to the figures. It is contemplated that elements disclosed in one embodiment may be beneficially utilized on other embodiments without specific recitation.

### Detailed Description

Techniques for auto-scaling of workloads are described herein. In particular, in certain aspects, a scaling agent is configured to determine utilization of resources of a data center, and based on the utilization scale a number of workloads running in the data center. In certain aspects, where the utilization is below a threshold, the scaling agent is configured to cause an increase in a number of VMs running in the data center, and in some cases, further cause additional instances of a containerized workload to run on the VMs running in the data center. In certain aspects, where the utilization is above a threshold, the scaling agent is configured to cause a decrease in a number of VMs running in the data center, and in some cases, further cause fewer instances of a containerized workload to run on the VMs running in the data center. In particular, the scaling agent is configured to take as input information regarding a lower layer of the data center (i.e., utilization of physical resources of the data center), and use such input information to affect operation at a higher layer of the data center (i.e., management of containerized workloads running in the data center). Such techniques solve the technical problem of how to use unused capacity of a data center, and provide a technical benefit in that they allow for higher compute densities. Though certain aspects are discussed with respect to pods or containers as workloads instantiated on VMs, the techniques herein are similarly applicable to other types of workloads instantiated on VMs.

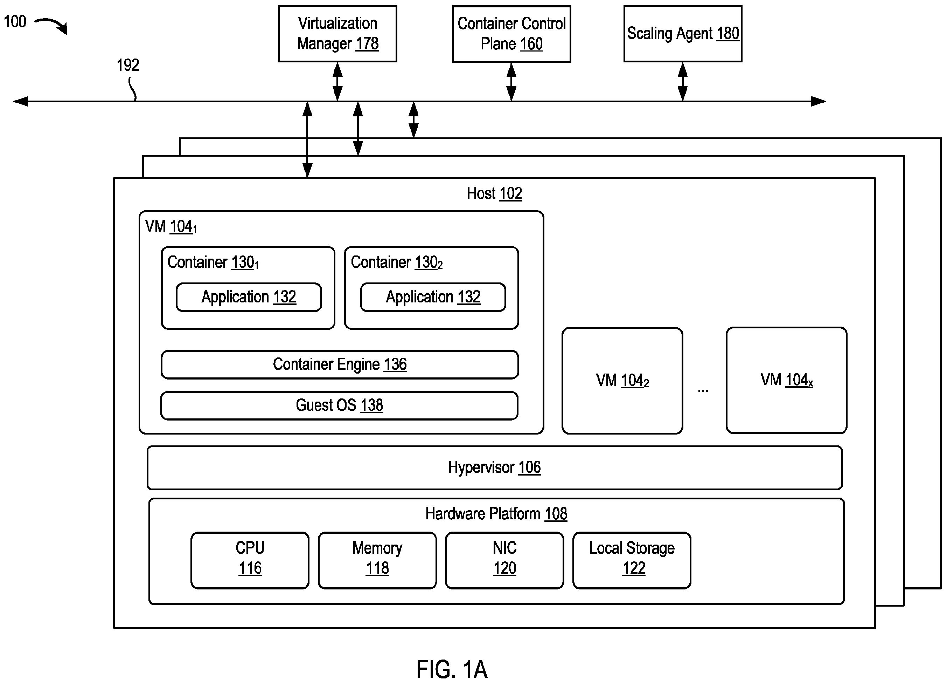

Figure 1A is a block diagram that illustrates a computing system 100 in which embodiments described herein may be implemented. Computing system 100 includes one or more hosts 102 connected by a physical network 192. In particular, physical network 192 enables communication between hosts 102, and/or between other components and hosts 102. Though not shown, connections between components and hosts 102 may be via one or more additional networks and/or components. Computing system 100 may be a data center.

Hosts 102 may be in a single host cluster or logically divided into a plurality of host clusters. Each host 102 may be configured to provide a virtualization layer, also referred to as a hypervisor 106, that abstracts processor, memory, storage, and networking resources of a hardware platform 108 of each host 102 into multiple VMs 104₁ to 104_{N} (collectively referred to as VMs 104 and individually referred to as VM 104) that run concurrently on the same host 102.

Hardware platform 108 of each host 102 includes components of a computing device such as one or more processors (central processing units (CPUs)) 116, memory 118, a network interface card including one or more network adapters, also referred to as NICs 120, and/or storage 122. CPU 116 is configured to execute instructions that may be stored in memory 118 and, optionally, in storage 122. Each CPU 116 may have one or more CPU cores, such that each host 102 has a number CPU cores.

In certain aspects, hypervisor 106 may run in conjunction with an operating system (not shown) in host 102. In some embodiments, hypervisor 106 can be installed as system level software directly on hardware platform 108 of host 102 (often referred to as "bare metal" installation) and be conceptually interposed between the physical hardware and the guest operating systems executing in the virtual machines. It is noted that the term "operating system," as used herein, may refer to a hypervisor. In certain aspects, hypervisor 106 implements one or more logical entities, such as logical switches, routers, etc. as one or more virtual entities such as virtual switches, routers, etc. In some implementations, hypervisor 106 may comprise system level software as well as a "Domain 0" or "Root Partition" virtual machine (not shown) which is a privileged machine that has access to the physical hardware resources of the host. In this implementation, one or more of a virtual switch, virtual router, virtual tunnel endpoint (VTEP), etc., along with hardware drivers, may reside in the privileged virtual machine.

Each VM 104 implements a virtual hardware platform that supports the installation of a guest OS 138 which is capable of executing one or more applications. Guest OS 138 may be a standard, commodity operating system. Examples of a guest OS include Microsoft Windows, Linux, and/or the like.

The virtual hardware platform may include one or more virtual CPUs (VCPUs), a virtual random access memory (VRAM), a virtual network interface adapter (VNIC), and/or virtual host bus adapter (VHBA). For example, hypervisor 106 may be configured to implement the virtual hardware platform of each VM 104 as backed by the hardware platform 108 of host 102. As an example, a VCPU may be backed by computed cycles of one or more CPU cores of CPUs 116, such as using time sharing of the CPU cores between different VCPUs. For example, a VCPU may be allocated a share of the compute cycles of one or more CPU cores. A VRAM may be backed by physical memory 118 and/or storage 122. For example, the VRAM may be allocated a share of physical memory 118 and/or storage 122.

In certain embodiments, each VM 104 includes a container engine 136 installed therein and running as a guest application under control of guest OS 138. Container engine 136 is a process that enables the deployment and management of virtual instances (referred to interchangeably herein as "containers") by providing a layer of OS-level virtualization on guest OS 138 within VM 104. Containers 130₁ to 130_{Y} (collectively referred to as containers 130 and individually referred to as container 130) are software instances that enable virtualization at the OS level. That is, with containerization, the kernel of guest OS 138, or an OS of host 102 if the containers are directly deployed on the OS of host 102, is configured to provide multiple isolated user space instances, referred to as containers. Containers 130 appear as unique servers from the standpoint of an end user that communicates with each of containers 130. However, from the standpoint of the OS on which the containers execute, the containers are user processes that are scheduled and dispatched by the OS.

Containers 130 encapsulate an application, such as application 132 as a single executable package of software that bundles application code together with all of the related configuration files, libraries, and dependencies required for it to run. Application 132 may be any software program, such as a word processing program.

Each container 130 may be assigned resources for running the application 132. For example, container 130 running on a VM 104 may be assigned VCPU resources and VRAM resources of the VM 104. For example, each container 130 may be allocated a certain number of VCPUs and a certain amount of VRAM, such as based on a request and/or limit associated with the container 130.

In certain embodiments, computing system 100 includes a virtualization manger 178. Virtualization manager 178 may be used to manage each of the clusters of hosts 102, (e.g., having VMs 104 running thereon) in the computing system 100. For example, the virtualization manager 178 may be configured to carry out administrative tasks for the computing system 100, including managing the hosts 102, grouping the hosts 102 into one or more host clusters, managing (e.g., configuring, starting, stopping, suspending, etc.) the VMs 104 running within each host 102, provisioning the VMs 104, transferring the VMs 104 from one host to another host, transferring application instances between the VMs 104, and/or load balancing the VMs 104 among the hosts 102 within each host cluster. The virtualization manager 178 may be a computer program that resides and executes in one or more central servers, which may reside inside or outside the computer system 100, or alternatively, may run as one or more VM 104 in one or more hosts 102 inside or outside the computer system 100. One example of a virtualization manager is the vCenter Server^{®} product made commercially available by VMware, Inc. of Palo Alto, California.

As virtualization manager 178 is configured to carry out administrative tasks for the computing system 100, virtualization manager 178 also has information regarding resources of the computing system 100. For example, virtualization manager 178 may have information of a total number of resources of one or more types that are in computing system 100, such as a number of CPU cores in computing system 100 (e.g., CPU cores of CPUs 116 of hosts 102), an amount of memory in computing system 100 (e.g., memory 118 of hosts 102), and/or the like. Virtualization manager 178 may further have information regarding a utilization of resources (e.g., percentage, number, etc.) of one or more types that are in computing system 100, such as a percentage or number of CPU cores of computing system 100 being utilized, a percentage or amount of memory in computing system 100 being utilized, and/or the like. The information regarding a utilization of resources may include a current utilization of resources, an average utilization of resources (e.g., over a time period), a peak utilization of resources (e.g., within a time period), a utilization of resources at each of one or more specific time periods (e.g., months, days, hours of the day, and/or the like), and/or the like.

Virtualization manager 178 may further include one or more application programming interfaces (APIs) to allow communication with virtualization manager 178. For example, the APIs may allow other components or users to request information from virtualization manager 178, such as information regarding resources of the computing system 100. The information regarding resources of the computer system 100 may change for a number of different reasons, such as, the addition or removal of hosts 102 from computer system 100, a change in a number of workloads running on hosts 102, a change in an activity level of workloads running on hosts 102, etc.

In certain embodiments, computing system 100 can include a container control plane 160. In certain aspects, the container control plane 160 may be a computer program that resides and executes in one or more central servers, which may reside inside or outside the computer system 100, or alternatively, may run in one or more VMs 104 on one or more hosts 102 inside or outside the computer system 100. Container control plane 160 is an orchestration control plane, such as Kubernetes, to deploy and manage applications on VMs 104, of a cluster of VMs (also referred to as a node cluster), using containers 130. For example, Kubernetes may deploy containerized applications, as containers 130 and a control plane on a cluster of VMs 104. The control plane 160, for each cluster of VMs 104, manages the computation, storage, and memory resources to run containers 130. Further, the control plane 160 may support the deployment and management of applications on the cluster of VMs using containers 130. In some cases, the control plane 160 deploys applications as pods of containers running on VMs 104.

In certain embodiments, computing system 100 includes a scaling agent 180. In certain aspects, the scaling agent 180 may be a computer program that resides and executes in a central server, which may reside inside or outside the computer system 100, or alternatively, may run as a VM 104 or other virtual computing instance in one of the hosts 102 inside or outside the computer system 100. In an example, scaling agent 180 runs as part of virtualization manager 178. In an example, scaling agent 180 runs as a service or function within a cluster management mechanism integrated with virtualization manager 178, such as VMware's Dynamic Resource Manager (DRS) which also performs hypervisor cluster balancing functions. Scaling agent 180 is configured to determine utilization of resources of computer system 100, and based on the determined utilization, scale a number of VMs 104 running on hosts 102 of computing system 100 and/or scale a number of pods and/or containers 130 running on the VMs 104.

In certain aspects, scaling agent 180 is configured to communicate with virtualization manager 178 to determine utilization of resources of computer system 100. For example, scaling agent 180 may be configured to call one or more APIs of virtualization manager 178 to request and receive information regarding resources of the computing system 100. In certain aspects, scaling agent 180 is further configured to communicate with virtualization manager 178 to cause virtualization manager 178 to change (e.g., increase or decrease) a number of VMs 104 instantiated on hosts 102 for running one or more containerized workloads. Though certain aspects are discussed with respect to scaling agent 180 receiving information regarding resources of the computing system 100 from virtualization manager 178, scaling agent 180 may instead or additionally be configured to monitor/receive the information regarding resources as desired state information (e.g., stored in a database) that is used (e.g., by virtualization manager 178) to configure computer system 100 and derive certain information regarding resources of the computing system 100 based on the desired state information. For example, the desired state information may indicate a number of nodes to run on hosts 102 in computing system 100, a number of workloads to run, etc., and certain utilization information of resources of hosts 102 may be derived in view of the desired state information.

In certain aspects, scaling agent 180 is configured to communicate with container control plane 160. For example, in certain aspects, container control plane 160 is configured to communicate with virtualization manager 178 to cause virtualization manager 178 to change (e.g., increase or decrease) a number of VMs 104 instantiated on hosts 102 for running one or more containerized workloads. Accordingly, in certain aspects, scaling agent 180 may communicate with container control plane 160 instead of directly with virtualization manager 178 to change a number of VMs 104 instantiated on hosts 102.

In certain aspects, scaling agent 180 is configured to communicate with container control plane 160 to cause container control plane 160 to change (e.g., increase or decrease) a number of pods and/or containers 130 of one or more containerized workloads running on the VMs 104.

In certain aspects, the containerized workload may include an operator (not shown) configured to perform one or more functions of container control plane 160. For example, a Kubernetes operator is an application-specific controller that extends the functionality of the Kubernetes API to create, configure, and/or manage instances of complex products on behalf of a Kubernetes user. More specifically, a Kubernetes operator uses custom controllers to monitor and track custom Kubernetes objects, referred to as custom resource definition (CRD) objects, to help ensure that the actual state of the cluster and the desired state of cluster are always in-sync within the cluster (e.g., via continuous monitoring of the CRD objects). Whenever the state of the cluster is different from what has been defined, a Kubernetes operator acts to reconcile the current state of the cluster. Accordingly, in certain aspects, scaling agent 180 is configured to communicate with the operator instead of container control plane 160 to change a number of VMs 104 instantiated on hosts 102 and/or a number of pods and/or containers 130 of one or more containerized workloads running on the VMs 104.

It should be noted that though an example architecture is described herein with respect to certain operations controlled and handled by an operator, container control plane 160, and/or virtualization manager 178, it should understood that each such operation may be performed by a different component than the component described as performing the operation. In particular, though certain examples are discussed herein with respect to scaling agent 180 communicating with container control plane 160 to change a number of VMs 104 instantiated on hosts 102 for running one or more containerized workloads, it should be noted that scaling agent 180 may instead communicate with virtualization manager 178 and/or an operator for the containerized workload. Further, though certain examples are discussed herein with respect to scaling agent 180 communicating with container control plane 160 to change a number of pods and/or containers 130 of one or more containerized workloads running on the VMs 104, it should be noted that scaling agent 180 may instead communicate with an operator for the containerized workload.

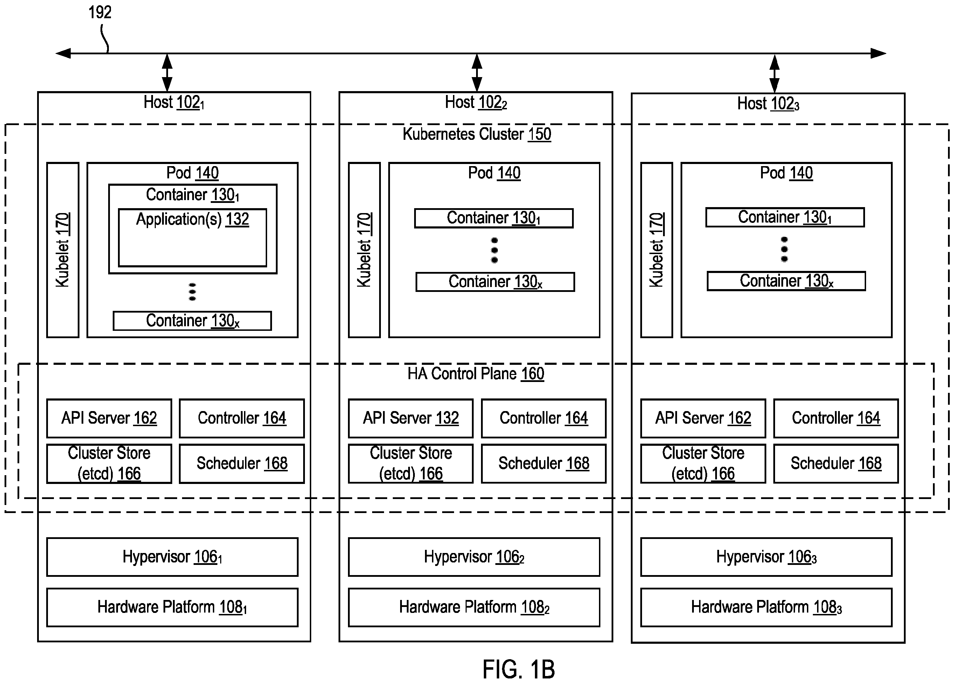

An example container-based cluster for running containerized applications is illustrated in Figure 1B. While the example container-based cluster shown in Fig. 1B is a Kubernetes cluster 150, in other examples, the container-based cluster may be another type of container-based cluster based on container technology, such as Docker^{®} clusters.

As illustrated in Figure 1B, Kubernetes cluster 150 is formed from a combination of one or more pods 140 including one or more containers 130 (e.g., for running applications 132), one or more kubelets 170, and control plane 160. Though components of cluster 150 are shown running directly on hosts 102 for ease of illustration, the components may be running on VMs 104 running on hosts 102. Further, although not illustrated in Figure 1B, Kubernetes cluster 150 may include one or more kube proxies. A kube proxy is a network proxy that runs on each host 102 in Kubernetes cluster 150 that is used to maintain network rules. These network rules allow for network communication with pods 140 from network sessions inside and/or outside of Kubernetes cluster 150.

Kubelet 170 on each host 102 is an agent that helps to ensure that one or more pods 140 run on each host 102 according to a defined state for the pods 140, such as defined in a configuration file. Each pod 140 may include one or more containers 130.

Control plane 160 includes components such as an application programming interface (API) server 162, a cluster store (etcd) 166, a controller 164, and a scheduler 168. Control plane 160's components make global decisions about Kubernetes cluster 150 (e.g., scheduling), as well as detect and respond to cluster events (e.g., starting up a new pod 140 when a workload deployment's replicas field is unsatisfied).

API server 162 operates as a gateway to Kubernetes cluster 150. As such, a command line interface, web user interface, users, and/or services communicate with Kubernetes cluster 150 through API server 162. One example of a Kubernetes API server 162 is kube-apiserver. kube-apiserver is designed to scale horizontally-that is, this component scales by deploying more instances. Several instances of kube-apiserver may be run, and traffic may be balanced between those instances.

Cluster store (etcd) 166 is a data store, such as a consistent and highly-available key value store, used as a backing store for Kubernetes cluster 150 data. In certain aspects, cluster store (etcd) 166 stores a configuration file made up of one or more manifests that declare intended system infrastructure and application(s) 132 to be deployed in Kubernetes cluster 150. In certain aspects, the manifests are JSON and/or YAML files.

Controller 164 is a control plane 160 component that runs and manages controller processes in Kubernetes cluster 150. As described above, control plane 160 may have (e.g., four) control loops called controller processes, which watch the state of Kubernetes cluster 150 and try to modify the current state of Kubernetes cluster 150 to match an intended state of Kubernetes cluster 150.

Scheduler 168 is a control plane 160 component configured to allocate new pods 140 to hosts 102. Additionally, scheduler 168 may be configured to distribute applications 132, across containers 130, pods 140, VMs 104, and/or hosts 102 that are assigned to use resources of hardware platform 108. Resources may refer to processor resources, memory resources, networking resources, and/or the like. In some cases, scheduler 168 may schedule newly created containers 130 to one or more VMs 104 of the hosts 102.

In other words, control plane 160 manages and controls every component of Kubernetes cluster 150. Control plane 160 handles most, if not all, operations within Kubernetes cluster 150, and its components define and control Kubernetes cluster 150's configuration and state data. Control plane 160 configures and runs the deployment, management, and maintenance of the containerized applications 132. As such, ensuring high availability of the control plane may be critical to container deployment and management. High availability is a characteristic of a component or system that is capable of operating continuously without failing.

Accordingly, in certain aspects, control plane 160 may operate as a high availability (HA) control plane. Additional details of HA control planes are disclosed in U.S. Application Serial No. 63/347,815, filed on June 1, 2022, and titled "AUTONOMOUS CLUSTERS IN A VIRTUALIZATION COMPUTING ENVIRONMENT," which is hereby incorporated by reference herein in its entirety.

As discussed, in certain aspects, scaling agent 180 is configured to monitor a utilization of resources of one or more hosts 102 of a computer system, and based on the utilization, scale a number (quantity) of containerized workloads running on the one or more hosts 102.

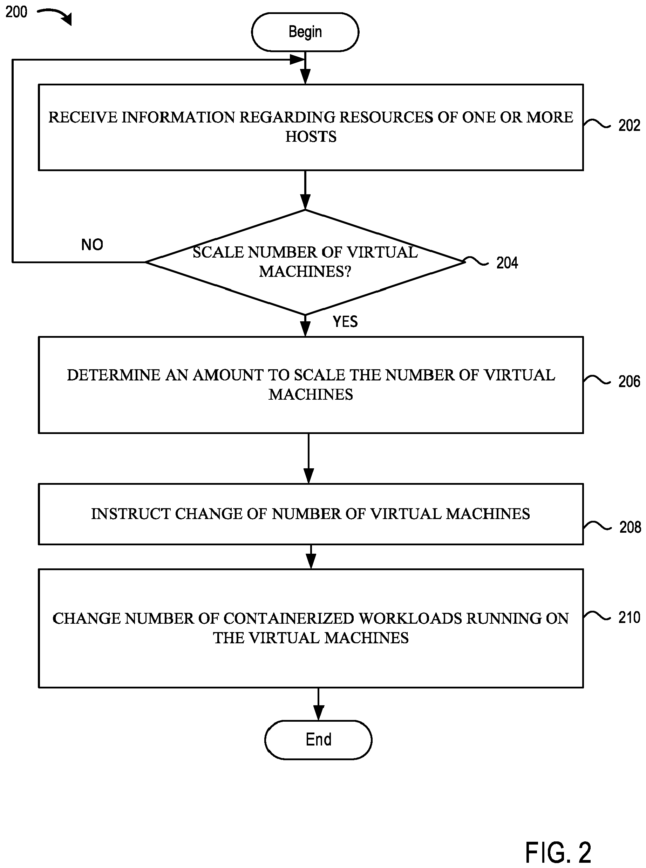

Figure 2 shows a flow diagram depicting a method 200 for scaling a number of containerized workloads running on one or more hosts based on a utilization of resources of the one or more hosts.

At 202, scaling agent 180 receives information regarding resources of one or more hosts 102. For example, scaling agent 180 receives the information from virtualization manager 178 that is configured to carry out administrative tasks for the one or more hosts 102. In certain aspects, scaling agent 180 is configured to make an API call for the information to an API of virtualization manager 178. For example, scaling agent 180 may periodically make the API call for updated information to the API of virtualization manager 178. In certain aspects, virtualization manager 178 periodically pushes the information to scaling agent 180. In some embodiments, such as wherein scaling agent 180 is closely integrated to the virtualization manager 178, scaling agent 180 will periodically query a database serving the virtualization manager 178 for the information or request the information from another service running on or adjacent to virtualization manager 178, such as by a private communication mechanism.

The information regarding resources of the one or more hosts 102 received by scaling agent 180 may include one or more of information of a total number and/or utilization of resources of one or more types that are in the one or more hosts 102. The information of utilization of resources of one or more types that are in the one or more hosts 102 may include one or more of current utilization of resources, an average utilization of resources (e.g., over a time period), a peak utilization of resources (e.g., within a time period), an average utilization of resources at each of one or more specific time periods (e.g., months, days, hours of the day, and/or the like), and/or the like. In some embodiments, the information of utilization of resources of one or more types that are in the one or more hosts 102 may include information on CPU contention levels, sometimes known as 'CPU Ready Time,' indicating the degree of time VMs are ready for CPU cycles but cannot immediately receive said cycles, such as at each of one or more specific time periods.

In certain aspects, scaling agent 180 derives certain information regarding utilization of resources of the one or more hosts 102 based on information regarding resources of the one or more hosts 102 received by scaling agent 180. For example, scaling agent 180 may determine a percentage utilization of a given resource type based on receiving information regarding a total number of such resources on the one or more hosts 102 and a number of such resources utilized on the one or more hosts 102. As another example, scaling agent 180 may determine a peak utilization, average utilization, etc., based on receiving current utilization information over different time periods.

In certain aspects, scaling agent 180 predicts future information regarding utilization of resources of the one or more hosts 102 based on information regarding resources of the one or more hosts 102 received by scaling agent 180. For example, scaling agent 180 may use predictive models to track the periodicity of utilization of resources at different times, days, etc.

Continuing, at 204, scaling agent 180 determines whether to scale/change a number (quantity) of VMs 104 (e.g., pod VMs) running on the one or more hosts 102, such as based on the information regarding utilization of resources received and/or derived at scaling agent 180 or other information received such as from virtualization manager 178 (e.g., an indication of an increase or decrease in number of hosts 102).

For example, scaling agent 180 may be configured with one or more triggers (also referred to as conditions), which when met, cause scaling agent 180 to scale a number of VMs 104 running on the one or more hosts 102.

One example trigger includes an increase in a number of hosts 102. In certain aspects, when the number of hosts 102 increases, scaling agent 180 determines to increase a number of VMs 104 running on the hosts 102, such as by determining to instantiate additional VMs 104 on the added host(s) 102.

In certain embodiments, instead of or in addition to immediately increasing a number of VMs 104 running on the hosts 102, scaling agent 180 determines to increase a maximum allowed number of VMs 104 that can run on the hosts 102. In certain embodiments, the scaling agent 180 increases the maximum allowed number of VMs 104 that can run on the hosts 102 by increasing a pod quota for one or more namespaces (e.g., Kubernetes namespace) managed by container control plane 160. By increasing the maximum allowed number of VMs 104, additional VMs 104 can be created up to the new maximum allowed number of VMs 104 as demands of workloads increase or as requested by an operator (e.g., KubeRay which bridges the Ray.io framework with the Kubernetes framework on which it runs).. For example, the additional VMs 104 may not be created immediately, but may be provisioned as needed up to the maximum allowed number of VMs 104 assigned to the namespace. In certain aspects, a Kubernetes namespace is a cluster concept which can be assigned a maximum pod quota along with CPU or memory allocation quotas. Once the pod quota is reached, no more VMs 104 can be created for the namespace. Further, after the CPU or memory allocation quotas are reached, no more containers can be created anywhere within the pods running on VMs 104 associated with the namespace.

Another example trigger includes a decrease in a number of hosts 102. In certain aspects, when the number of hosts 102 decreases, scaling agent 180 determines to decrease a number of VMs 104 running on the hosts 102, such as by determining to power down VMs 104 on the removed host(s) 102 instead of migrating the VMs 104 to continue running on different host(s) 102.

In certain embodiments, instead of or in addition to immediately decreasing the number of VMs 104 running on the hosts 102, scaling agent 180 determines to decrease a maximum allowed number of VMs 104 that can run on the hosts 102, such as by decreasing the pod quota for the one or more namespaces in proportion to the number of VMs 104 on the removed host(s) 102.

Another example trigger includes a change in utilization of one or more resource types, such as CPU core and/or memory utilization. For example, if the utilization of one or more resource types changes by a threshold amount (e.g., 15%) since a previous utilization, scaling agent 180 determines to change a number of VMs 104 running on the hosts 102. In certain embodiments, scaling agent 180 determines to change the maximum allowed number of VMs 104 that can run on the hosts 102 (e.g., by changing the pod quota for one or more namespaces) in response to the change in utilization of one or more resource types. In some embodiments, such as where utilization fluctuations of the one or more resource types are estimated to be short in duration, a quota for the one or more resource types (e.g., a CPU quota, memory allocation quota, etc.) may be changed for the one or more namespaces instead of changing the number of VMs 104 running on the hosts 102 or the maximum allowed number of VMs 104 that can run on the hosts 102. In particular, a change in the quota for one or more resource types may be instantaneous and not require creating or powering off VMs 104, but still limits the creation of additional containers and thereby restricts the addition of new resource loads on the hosts 102.

Another example trigger includes a change in a target utilization for one or more resource types of the one or more hosts 102.

Another example trigger includes a change in a policy governing an amount (e.g., percentage of unused resources) of one or more resource types of the one or more hosts 102 assignable to the one or more virtual machines (e.g., to containerized workloads running on the one or more virtual machines).

Another example trigger includes a change in date or time triggering a schedule based policy determining maximum utilization of the one or more resource types assignable to the one or more virtual machines.

If it is determined not to currently scale the number of VMs 104 running on the one or more hosts 102 at 204, the process returns to 202.

Continuing, at 206, when it is determined to scale the number of VMs 104 (e.g., pod VMs) running on the one or more hosts 102, scaling agent determines an amount to scale/change the number of VMs 104, such as based on the information regarding utilization of resources received and/or derived at scaling agent 180, and in certain embodiments, in accordance with maximum and minimum utilization thresholds assigned by an administrator.

In certain aspects, scaling agent 180 changes the number of VMs 104 running on the one or more hosts 102 based on the utilization of one or more resource types of the one or more hosts 102. For example, scaling agent 180 may be configured (e.g., by a user) with a target utilization (e.g., 80%) for the one or more resource types of the one or more hosts 102. Each resource type may have its own target utilization, or different resource types may have different target utilizations. For example, the one or more hosts 102 may have 1000 cores. Based on a target utilization of 80%, scaling agent 180 determines to target using 800 of the 1000 cores. Further, as an example, the one or more hosts 102 may have 4000 GB of RAM. Based on a target utilization of 80%, scaling agent 180 determines to target using 3200 GB of the 4000 GB of RAM.

Further, each VM 104 may have a configuration, such as a number/amount of each of the one or more resource types the VM is configured with. In an example, one VM configuration includes 8 VCPUs and 32 GB of VRAM (virtual memory). In another example, a VM configuration includes 4 VCPUs and 8 GB of VRAM.

In an example, scaling agent 180 may determine the target utilization of CPU cores of one or more hosts 102 is 800 cores, and that currently the utilization (e.g., a peak, average, or current) is 600 cores. Therefore, scaling agent 180 determines there are 200 cores of capacity unused. Accordingly, scaling agent 180 may determine to increase the number of VMs 104 running on the one or more hosts 102. In one example, scaling agent 180 is configured to increase the number of VMs 104 proportionally with the configuration of the VMs 104. For example, scaling agent may determine to divide the number of cores of capacity unused by the number of virtual cores per VM (e.g., 8) to determine the number of additional VMs 104 to instantiate or amount to increase the maximum allowed number of VMs in one or more namespaces. In this example, scaling agent 180 may determine to instantiate an additional 200/8 = 25 VMs 104, or increase the maximum allowed number of VMs in one or more namespaces by 25, as discussed.

Where currently the utilization (e.g., 1000 cores) is above the target utilization (e.g., 800 cores), scaling agent 180 determines there are, for example 200, cores of capacity overused. Accordingly, scaling agent 180 may determine to decrease the number of VMs 104 running on the one or more hosts 102. In one example, scaling agent 180 is configured to decrease the number of VMs 104 proportionally with the configuration of the VMs 104. For example, scaling agent 180 may determine to divide the number of cores of capacity overused by the number of virtual cores per VM (e.g., 8) to determine the number of VMs 104 to decrease. In this example, scaling agent 180 may determine to decrease/power down 200/8 = 25 VMs 104, or decrease the maximum allowed number of VMs in one or more namespaces by 25, as discussed.

In another example, scaling agent 180 may oversubscribe the number of VCPUs to cores of the one or more hosts 102. In particular, a VM 104 is not likely to fully utilize all the capacity of its VCPUs all the time. Therefore, scaling agent 180 may oversubscribe the number of VCPUs to cores, such as by an oversubscription amount (e.g., 20%). For example, in the case of unused capacity, scaling agent 180 may determine to divide the number of cores of capacity unused by the number of virtual cores per VM (e.g., 8) and increase that by the oversubscription amount to determine the number of additional VMs 104 to instantiate, or amount to increase the maximum allowed number of VMs in one or more namespaces. In the previous example, where there are 200 unused cores of capacity, scaling agent 180 may determine to instantiate an additional 200/8 * 120% = 30 VMs 104, or increase the maximum allowed number of VMs in one or more namespaces by 30. As another example, in the case of overused capacity, scaling agent 180 may determine to divide the number of cores of capacity overused by the number of virtual cores per VM (e.g., 8) and increase that by the oversubscription amount to determine the number of VMs 104 to decrease. In the previous example, where there are 200 overused cores of capacity, scaling agent 180 may determine to decrease/power down 200/8 * (120%) = 30 VMs 104, or decrease the maximum allowed number of VMs in one or more namespaces by 30.

In certain aspects, scaling agent 180 is configured to scale up or down (increase or decrease) VMs having different configurations (also referred to as different VM types). For example, there may be multiple node clusters for a containerized workload, such as a first group of VMs 104 and a second group of VMs 104, and the VMs 104 in the different groups may have different configurations. In certain aspects, scaling agent 180 may adjust (e.g., increase or decrease) the number of VMs 104 of each of multiple configuration running on hosts 102, such as according to a proportion (e.g., 1 VM of 8 VCPUs to 1 VM of 4 CPUs, 2 VMs of 8 VCPUs to 1 VM of 4 CPUs, X VMs of 8 VCPUs to Y VMs of 4 CPUs, etc.). For example, where the proportion is 1:1 8 VCPU VMs to 4 VCPU VMs, and there are 200 cores of unused capacity, and without oversubscription, scaling agent 180 may determine to instantiate or increase the maximum allowed number of VMs in one or more namespaces by 200/(4+8) = about 16 of each VM type, meaning 16 of the 8 VCPU VMs and 16 of the 4 VCPU VMs. Similar calculations can be made for oversubscription and/or overused capacity, as would be understood by one of skill in the art. In another example, the available resources may be divided between the different VM types, such as according to a ratio (e.g., 1:1). For example, where the proportion is 1:1 8 VCPU VMs to 4 VCPU VMs, and there are 200 cores of unused capacity divided between the two VM types, and without oversubscription, scaling agent 180 may determine to instantiate or increase the maximum allowed number of VMs in one or more namespaces by 100/8 = 12 VMs with 8 VCPUs and 100/4 = 25 VMs with 4 VCPUs.

In certain aspects, scaling agent 180 changes the number of VMs 104 running on the one or more hosts 102 based on the utilization of multiple resource types of the one or more hosts 102. For example, one of the multiple resource types may be the limiting resource type based on which the number of VMs 104 to increase or decrease is determined by scaling agent 180. In particular, the limiting resource type may be the resource type for which less VMs 104 can be instantiated (or for which the maximum allowed number of VMs in one or more namespaces can be increased less) or more VMs 104 are decreased/powered down (or for which the maximum allowed number of VMs in one or more namespaces can be decreased more) based on overuse or unused capacity. For example, where there are 80 unused cores and 220GB of memory available, and a VM configuration indicates 8 VCPUs and 32 GB of memory, memory may be the limiting resource type. For example, without oversubscription 80 cores/8 VCPUs per VM = 10 VMs while 220 RAM /32 VRAM per VM = about 6 VMs. Therefore, only 6 VMs may be instantiated or the maximum allowed number of VMs in one or more namespaces can be increased by only 6 VMs.

In certain aspects, where there are different VM configurations, different resource types may be the limiting resource type for the VMs of the different VM configurations. For example, assume one VM configuration indicates 8 VCPUs and 32 GB of memory, a second VM configuration indicates 4 VCPUs and 8 GB of memory, and the available resources are divided evenly between the different VM configurations, and there are 80 unused cores and 220 GB of memory available. For the 8 VCPU and 32 GB memory VMs, the limiting resource type is memory, while for the 4 VCPUs and 8 GB of memory, cores is the limiting resource type. In particular, based on memory, there would be 110 GB /32 GB per VM = about 3 VMs with 8 VCPUs and 32 GB memory, which is more restrictive than based on cores, 40 cores/8 cores per VM = 5 VMs. Therefore, scaling agent 180 determines to instantiate 3 VMs with 8 VCPUs and 32 GB memory, or increase the maximum allowed number of such VMs in one or more namespaces by 3. In particular, based on cores, there would be 40 cores/4 cores per VM = 10 VMs with 4 VCPUs and 8 GB memory, which is more restrictive than based on memory, 110 GB/8 GB per VM = 13 VMs. Therefore, scaling agent 180 determines to instantiate 10 VMs with 4 VCPUs and 8 GB memory, or increase the maximum allowed number of such VMs in one or more namespaces by 10.

In certain aspects, instead of reactively determining a change in the number of VMs 104 to run on one or more host 102, scaling agent 180 may determine a predicted utilization such as a predicted capacity unused or overused of one or more hosts 102. The predicted capacity may be used to make determinations to increase or decrease the number of VMs 104, similar to how the current utilization may be used to make the determinations as discussed. In certain aspects, based on the predicted capacity, scaling agent 180 may proactively change the number of VMs 104 on one or more hosts 102 before the utilization actually reaches the predicted capacity. For example, if it is predicted based on past utilization that CPU utilization will increase by 20% at the same time each day, scaling agent 180 may proactively change the number of VMs 104 on the one or more hosts 102 before that time, such as by instantiating additional VMs 104 or increasing the maximum allowed number of such VMs in one or more namespaces. By making the change proactively, for an increase in VMs 104, additional capacity may be used earlier, leading to workloads being completed more quickly. By making the change proactively, for a decrease in VMs 104, potential performance degradation of other processes running on the hosts 102 is avoided, as there is not overuse of resources. In certain aspects, by making the change proactively, the increase or decrease in the number of VMs 104 can be done over time, such as in batches, as instantiating VMs in a shorter period of time may adversely affect performance of other processes on hosts 102 more than instantiating the same number of VMs over a longer period of time.

Further, at 208, scaling agent 180 instructs container control plane 160 (or other suitable component as discussed herein) to change the number of VMs 104 running on the one or more hosts 102 based on the determined number of VMs 104 to scale determined at 206. The number of VMs 104 running may be changed by scaling agent 180 directly instructing instantiation/power off of VMs 104, and/or by changing a maximum allowed number of VMs 104 that can run on hosts 102 (e.g., by setting pod quota(s), changing a number of Ray nodes, etc.). For example, scaling agent 180 may make an API call to API server 162. Container control plane 160 may accordingly instruct virtualization manager 178, e.g., via an API call, to change the number of VMs 104 based on the determined number of VMs 104 to scale determined at 206. Virtualization manager 178 may then communicate with hypervisor(s) 106 on host(s) 102 to change the number of VMs 104 running on host(s) 102 according to the determined number.

In certain embodiments, where the number of VMs 104 is increased, scaling agent 180 instructs control plane 160 to instantiate the determined number of VMs 104 to scale determined at 206. In certain embodiments, where the number of VMs 104 is decreased, scaling agent 180 instructs control plane 160 to power off the determined number of VMs 104 to scale determined at 206.

In certain embodiments, in a Kubernetes environment, where Kubernetes is being consumed by a higher level framework, such as a distributed computational framework such as Ray.io, the scaling agent 180 may make calls to a component of the higher level framework, such as a Ray head node or operator. For example, scaling agent 180 may make API calls to the Ray head node to change a capacity configuration (e.g., number of Ray nodes running in containers), which automatically triggers a change in the utilization of the Kubernetes infrastructure. This creates a graceful change in the overall consumption without semantic disruptions to the higher level framework. Upon completion of Ray's change in node account, the scaling agent 180 may also set a new maximum allowed number of VMs 104, which will prevent the higher level framework from expanding beyond the maximum allowed number of VMs 104. An operator, such as the KubeRay operator, may then function to change the number of VMs 104 used by Kubernetes.

In certain embodiments, where the number of VMs 104 is increased, scaling agent 180 increases a maximum allowed number of VMs 104 that can run on hosts 102. For example, scaling agent 180 may increase a pod quota for one or more namespaces, allowing additional VMs 104 to be created as needed up to the new pod quota, such as in response to additional workload demand.

In certain embodiments, where the number of VMs 104 is decreased, scaling agent 180 decreases a maximum allowed number of VMs 104 that can run on hosts 102. For example, scaling agent 180 may decrease a pod quota for one or more namespaces.

Continuing, at 210, the number (quantity) of containerized workloads (e.g., pods, containers, etc.) running on the VMs 104 is changed (e.g., increased or decreased) based on the change in the number of VMs 104 and/or on a change in quota for one or more resource types, as discussed, such as a CPU quota, memory allocation quota, etc. In certain aspects, container control plane 160 or an operator is configured to automatically change the number of containerized workloads based on the change in the number of VMs 104 and/or on a change in quota for one or more resource types. In certain aspects, scaling agent 180 determines a change to the number of containerized workloads based on the change in the number of VMs 104 and/or on a change in quota for one or more resource types and instructs container control plane 160 and/or an operator accordingly. For example, as discussed, like a VM 104 uses resources of a host 102, a container 130 uses virtual resources of a VM 104. The number of containers 130 on one or more VM 104s for running a containerized workload may be changed according to any of the same or similar techniques discussed herein for changing the number of VMs 104 on one or more hosts 102, including reactively, predictively, with or without oversubscription, etc. In particular, a container 130 may have a container configuration indicating a number of resources (e.g., VCPUs, memory, etc.) used per container, and the one or more VMs 104 have a number of available resources (e.g., VCPUs, VRAM, etc.). Therefore, the number of containers is changed based on the number of available resources of the one or more VMs 104.

As an example, if 5 VMs with 8 VCPUs are additionally instantiated on one or more hosts 102, then there are 40 additional VCPUs available for running containers 130. If each container is configured to use 2 VCPUs, and without oversubscription, then 40 VCPUs/2 VCPUs per container = 20 additional containers may be instantiated in the VMs 104 running on one or more hosts 102. In certain embodiments, a higher layer distributed framework such as Ray.io can then create 20 new Ray nodes inside the 20 additional containers.

Different workloads may have different priorities. For example, some workloads (e.g., production workloads) may be more time-sensitive or critical to operations of a data center, while other workloads (e.g., background workloads) may be less time-sensitive, and may run in the background. In certain aspects, the techniques for automatically scaling workloads are used for lower priority workloads that run in the background. Examples of such lower priority workloads include machine learning models, video processing, etc. Accordingly, lower priority workloads may use any resources unused by higher priority workloads.

In certain aspects, it is desirable for lower priority workloads to yield to higher priority workloads running on one or more hosts 102. For example, a higher priority workload on a host 102 may need resources of the host 102 at a given time, but the resources may be in use by other higher priority workloads and other lower priority workloads. In some cases, the need for resources may be temporary, or may not cause a change in the number of VMs 104 running lower priority workloads. In certain aspects, the lower priority workloads are configured to yield (e.g. consume proportionately fewer CPU and memory resources, etc.) to allow the higher priority workloads to use the resources. For example, a lower priority workload on a host 102 may, upon host CPU contention, be allocated 2 CPU cycles for every 5 CPU cycles allocated to higher priority workloads, so that the host CPU contention has a lesser impact to the higher priority workload. In the case of memory contention, the relative priorities impact which memory pages will be compressed or evicted from physical host 102 RAM with the higher priority workload evicting 2 memory pages for every 5 pages evicted of the lower priority workload in the example above.

In certain aspects, VMs 104 running on a host 102 are assigned to different priority pools depending on the priority of workloads running on the VMs 104. For example, VMs 104 running lower priority workloads may be assigned to a lower priority pool, while VM 104 running higher priority workloads may be assigned a higher priority pool. There also may be many different priority level pools with different priority levels, and VMs 104 may be assigned to those different pools.

The different pools of VMs can be allocated different share levels of resources. For example, a lower priority pool may be assigned 100 shares or 10 shares, while a higher priority pool may be assigned 1000 shares. As long as there are available resources on the one or more hosts 102, VMs 104, regardless of the pool they are in, may use the available resources. However, when the resource limit is reached such that additional resources on the one or more hosts 102 are not available for use by VMs 104, the VMs 104 may be configured to use resources according to the share level allocated to the pools. For example, at the resource limit, VMs 104 in a lower priority pool with 10 shares may only be allocated to use 10/1000 = 1/100^{th} the amount of resources that VMs 104 in the higher priority pool with 1000 shares are allowed to use.

It should be understood that, for any process described herein, there may be additional or fewer steps performed in similar or alternative orders, or in parallel, within the scope of the various embodiments, consistent with the teachings herein, unless otherwise stated.

The various embodiments described herein may employ various computer-implemented operations involving data stored in computer systems. For example, these quantities may take the form of electrical or magnetic signals, where they or representations of them are capable of being stored, transferred, combined, compared, or otherwise manipulated. Further, such manipulations are often referred to in terms, such as producing, identifying, determining, or comparing. Any operations described herein that form part of one or more embodiments of the invention may be useful machine operations. In addition, one or more embodiments of the invention also relate to a device or an apparatus for performing these operations. The apparatus may be specially constructed for specific required purposes, or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations.

The various embodiments described herein may be practiced with other computer system configurations including hand-held devices, microprocessor systems, microprocessor-based or programmable consumer electronics, minicomputers, mainframe computers, and the like.

One or more embodiments of the present invention may be implemented as one or more computer programs or as one or more computer program modules embodied in one or more non-transitory computer readable media. The term computer readable medium refers to any data storage device that can store data which can thereafter be input to a computer system-computer readable media may be based on any existing or subsequently developed technology for embodying computer programs in a manner that enables them to be read by a computer. Examples of a computer readable medium include a hard drive, network attached storage (NAS), read-only memory, random-access memory (e.g., a flash memory device), a CD (Compact Discs) --CD-ROM, a CD-R, or a CD-RW, a DVD (Digital Versatile Disc), a magnetic tape, and other optical and non-optical data storage devices. The computer readable medium can also be distributed over a network coupled computer system so that the computer readable code is stored and executed in a distributed fashion.

Although one or more embodiments of the present invention have been described in some detail for clarity of understanding, it will be apparent that certain changes and modifications may be made within the scope of the claims. Accordingly, the described embodiments are to be considered as illustrative and not restrictive, and the scope of the claims is not to be limited to details given herein, but may be modified within the scope and equivalents of the claims. In the claims, elements and/or steps do not imply any particular order of operation, unless explicitly stated in the claims.

Virtualization systems in accordance with the various embodiments may be implemented as hosted embodiments, non-hosted embodiments or as embodiments that tend to blur distinctions between the two, are all envisioned. Furthermore, various virtualization operations may be wholly or partially implemented in hardware. For example, a hardware implementation may employ a look-up table for modification of storage access requests to secure non-disk data.

Certain embodiments as described above involve a hardware abstraction layer on top of a host computer. The hardware abstraction layer allows multiple contexts to share the hardware resource. In one embodiment, these contexts are isolated from each other, each having at least a user application running therein. The hardware abstraction layer thus provides benefits of resource isolation and allocation among the contexts. In the foregoing embodiments, virtual machines are used as an example for the contexts and hypervisors as an example for the hardware abstraction layer. As described above, each virtual machine includes a guest operating system in which at least one application runs. It should be noted that these embodiments may also apply to other examples of contexts, such as containers not including a guest operating system, referred to herein as "OS-less containers" (see, e.g., www.docker.com). OS-less containers implement operating system-level virtualization, wherein an abstraction layer is provided on top of the kernel of an operating system on a host computer. The abstraction layer supports multiple OS-less containers each including an application and its dependencies. Each OS-less container runs as an isolated process in user space on the host operating system and shares the kernel with other containers. The OS-less container relies on the kernel's functionality to make use of resource isolation (CPU, memory, block I/O, network, etc.) and separate namespaces and to completely isolate the application's view of the operating environments. By using OS-less containers, resources can be isolated, services restricted, and processes provisioned to have a private view of the operating system with their own process ID space, file system structure, and network interfaces. Multiple containers can share the same kernel, but each container can be constrained to only use a defined amount of resources such as CPU, memory and I/O. The term "virtualized computing instance" as used herein is meant to encompass both VMs and OS-less containers.

Many variations, modifications, additions, and improvements are possible, regardless the degree of virtualization. The virtualization software can therefore include components of a host, console, or guest operating system that performs virtualization functions. Plural instances may be provided for components, operations or structures described herein as a single instance. Boundaries between various components, operations and data stores are somewhat arbitrary, and particular operations are illustrated in the context of specific illustrative configurations. Other allocations of functionality are envisioned and may fall within the scope of the invention(s). In general, structures and functionality presented as separate components in exemplary configurations may be implemented as a combined structure or component. Similarly, structures and functionality presented as a single component may be implemented as separate components. These and other variations, modifications, additions, and improvements may fall within the scope of the appended claim(s).

## Claims

1. A method for scaling workloads, the method comprising:
receiving information regarding resources of one or more host machines (102) running one or more virtual machines (104);
determining, based on the information, to change a quantity of the one or more virtual machines (104) running on the one or more host machines (102);
determining an amount to change the quantity of the one or more virtual machines (104) running on the one or more host machines (102) based on utilization of one or more resource types of the one or more host machines (102), the utilization indicated by the information; and
causing a change in the quantity of the one or more virtual machines (104) running on the one or more host machines (102) by the determined amount.

2. The method of claim 1, further comprising, based on the change in the quantity of the one or more virtual machines (104) running on the one or more host machines (102), causing a change to a quantity of containers (130) running or permitted to run in the one or more virtual machines (104).

3. The method of claim 2, further comprising, based on the change to the quantity of containers (130) running or permitted to run in the one or more virtual machines (104), changing a capacity configuration of a distributed computational framework executing on at least one container (130) running in the one or more virtual machines (104).

4. The method of any of claims 1 to 3, wherein determining to change the quantity of the one or more virtual machines (104) running on the one or more host machines (102) is based on one or more of:
a change in a number of the one or more host machines (102),
a change in utilization of the one or more resource types of the one or more host machines (102),
a change in a policy governing an amount of the one or more resource types assignable to the one or more virtual machines (104), or
a change in date or time triggering a schedule based policy determining maximum utilization of the one or more resource types assignable to the one or more virtual machines (104).

5. The method of any of claims 1 to 4, wherein the one or more virtual machines (104) are assigned to a first priority pool that has a lower priority than one or more other virtual machines (104) running on the one or more host machines (102).

6. The method of any of claims 1 to 5, wherein determining the amount to change the quantity of the one or more virtual machines (104) is further based on a configuration of the one or more virtual machines (104), the configuration indicating an amount of resources allocated to each of the one or more virtual machines (104).

7. The method of any of claims 1 to 6, wherein determining the amount to change the quantity of the one or more virtual machines (104) is further based on an oversubscription amount of resources of the one or more virtual machines (104) to the one or more resources types of the one or more host machines (102).

8. The method of any of claims 1 to 7, wherein determining the amount to change the quantity of the one or more virtual machines (104) is further based on which of the one or more resource types is a limiting resource type for running of the one or more virtual machines (104) on the one or more hosts (102).

9. The method of any of claims 1 to 8, wherein the utilization comprises a predicted utilization for a future time period.

10. A system comprising:
one or more processors (116); and
at least one memory (118), the one or more processors (116) and the at least one memory (118) configured to:
receive information regarding resources of one or more host machines (102) running one or more virtual machines (104);
determine, based on the information, to change a quantity of the one or more virtual machines (104) running on the one or more host machines (102);
determine an amount to change the quantity of the one or more virtual machines (104) running on the one or more host machines (102) based on utilization of one or more resource types of the one or more host machines (102), the utilization indicated by the information; and
cause a change in the quantity of the one or more virtual machines (104) running on the one or more host machines (102) by the determined amount.

11. The system of claim 10, wherein the one or more processors (116) and the at least one memory (118) are further configured to, based on the change in the quantity of the one or more virtual machines (104) run on the one or more host machines (102), causing a change to a quantity of containers (130) running or permitted to run in the one or more virtual machines (104).

12. The system of claim 11, wherein the one or more processors (116) and the at least one memory (118) are further configured to, based on the change to the quantity of containers (130) running or permitted to run in the one or more virtual machines (104), change a capacity configuration of a distributed computational framework executing on at least one container (130) running in the one or more virtual machines (104).

13. The system of any of claims 10 to 12, comprising at least one of the following features:
wherein determining to change the quantity of the one or more virtual machines (104) running on the one or more host machines (102) is based on one or more of:
a change in a number of the one or more host machines (102),
a change in utilization of the one or more resource types of the one or more host machines (102),
a change in a policy governing an amount of the one or more resource types assignable to the one or more virtual machines (104), or
a change in date or time triggering a schedule based policy determining maximum utilization of the one or more resource types assignable to the one or more virtual machines (104);
wherein the one or more virtual machines (104) are assigned to a first priority pool that has a lower priority than one or more other virtual machines (104) running on the one or more host machines (102);
wherein determining the amount to change the quantity of the one or more virtual machines (104) is further based on a configuration of the one or more virtual machines (104), the configuration indicating an amount of resources allocated to each of the one or more virtual machines (104);
wherein determining the amount to change the quantity of the one or more virtual machines (104) is further based on an oversubscription amount of resources of the one or more virtual machines (104) to the one or more resources types of the one or more host machines (102);
wherein determining the amount to change the quantity of the one or more virtual machines (104) is further based on which of the one or more resource types is a limiting resource type for running of the one or more virtual machines (104) on the one or more hosts (102);
wherein the utilization comprises a predicted utilization for a future time period.

14. One or more non-transitory computer-readable media comprising instructions that, when executed by one or more processors (116) of a computing system, cause the computing system to perform operations for scaling workloads, the operations comprising:
receiving information regarding resources of one or more host machines (102) running one or more virtual machines (104);
determining, based on the information, to change a quantity of the one or more virtual machines (104) running on the one or more host machines (102);
determining an amount to change the quantity of the one or more virtual machines (104) running on the one or more host machines (102) based on utilization of one or more resource types of the one or more host machines (102), the utilization indicated by the information; and
causing a change in the quantity of the one or more virtual machines (104) running on the one or more host machines (102) by the determined amount.

15. The one or more non-transitory computer-readable media of claim 14, wherein the operations further comprise, based on the change in the quantity of the one or more virtual machines (104) running on the one or more host machines (102), causing a change to a quantity of containers (130) running or permitted to run in the one or more virtual machines (104).
